# EUROPÄISCHE PATENTSCHRIFT

(11) **EP 2 929 263 B1**
(45) Veröffentlichungstag und Bekanntmachung des Hinweises auf die Patenterteilung: **10.10.2018**
(21) Anmeldenummer: 13828976.4
(22) Anmeldetag: 09.12.2013
(51) Int. Cl.: F25D 3/00, F25D 29/00

(54) **VERFAHREN UND VORRICHTUNG ZUR VORKONDITIONIERUNG VON LATENTWÄRMESPEICHERELEMENTEN**
METHOD AND APPARATUS FOR PRECONDITIONING OF LATENT HEAT STORE ELEMENTS
PROCEDE ET APPAREIL DE PRECONDITIONNEMENT D'ÉLÉMENTS D'ACCUMULATEUR DE CHALEUR LATENTE

(30) Priorität: 10.12.2012 DE 102012024027; 27.12.2012 DE 102012025192
(43) Veröffentlichungstag der Anmeldung: 14.10.2015
(73) Patentinhaber: va-Q-tec AG, 97080 Würzburg (DE)
(72) Erfinder: KUHN, Joachim, 97074 Würzburg (DE); ESCHENBACH, Fabian, 97228 Rottendorf (DE); HEINEMANN, Martin, 97074 Würzburg (DE)
(74) Vertreter: Von Rohr Patentanwälte Partnerschaft mbB
(86) Internationale Anmeldenummer: PCT/EP2013/003707
(87) Internationale Veröffentlichungsnummer: WO 2014/090390

(56) Entgegenhaltungen:
- WO-A1-97/17580
- US-A1- 2011 067 852
- US-B1- 6 482 332

## Beschreibung

Die Erfindung betrifft ein Verfahren zur Vorkonditionierung von einem oder mehreren Latentwärmespeicherelementen gemäß Anspruch 1 sowie eine Vorrichtung zur Vorkonditionierung von einem oder mehreren Latentwärmespeicherelementen gemäß Anspruch 9.

Bei der Speicherung von Wärme in einem dafür geeigneten Speichermaterial erhöht sich normalerweise dessen Temperatur. Diese Form der Wärmespeicherung wird fühlbare oder sensible Wärmespeicherung genannt.

Dann, wenn bei einem dafür geeigneten Material ein Phasenübergang erfolgt, z.B. der Übergang von der festen in die flüssige Phase (oder umgekehrt), ist der Zusammenhang zwischen der Temperatur des Speichermaterials und der vom Speichermaterial aufgenommenen (oder abgegebenen) Wärme nicht mehr linear. Bei einem Übergang von fest auf flüssig beginnt das Wärmespeichermaterial beim Erreichen der Temperatur des Phasenübergangs zu schmelzen. Diese Temperatur hält das Speichermaterial so lange bei, bis das Speichermaterial komplett geschmolzen ist. Erst danach tritt wieder eine Erhöhung der Temperatur bei weiterer Aufnahme von Wärme auf.

Da für längere Zeit trotz der Zufuhr von Wärme praktisch keine Erhöhung der Temperatur auftritt, nennt man dies latente Wärme. Im Falle beispielsweise des typischen Phasenübergangs fest/flüssig ist die latente Wärme gleich der Schmelz- oder Kristallisationswärme des Speichermaterials.

Ein Latentwärmespeichermaterial hat den großen Vorteil, dass man mit ihm in einem kleinen Temperaturintervall verhältnismäßig große Wärmemengen speichern kann. Da der Phasenübergang bei im Wesentlichen konstanter Temperatur über einen gewissen Zeitraum vonstatten geht, hat man die Möglichkeit, Temperaturschwankungen auszugleichen und Temperaturspitzen zu vermeiden.

Latentwärmespeichermaterialien sind in verschiedener Form bekannt. Man nennt diese Materialien aus der englischen Terminologie auch PCM-Materialien (phase change material).

Liegt man bei einer Zieltemperatur (Temperatur des Phasenübergangs) von etwa 0 °C, so kann man Wasser mit unterschiedlichen Zusätzen als Latentwärmespeichermaterial einsetzen. Für eine Kältespeicherung unterhalb von 0 °C werden z. B. passend zubereitete Salzlösungen verwendet.

Im Bereich knapp oberhalb 0 °C sind andere Materialien, z. B. solche auf der Basis von Paraffinen, besser geeignet.

Im Einzelnen wird als Hintergrund verwiesen auf den Übersichtsartikel des BINE-Informationsdienstes "Themeninfo IV/02 aus dem Jahre 2002", (Fachinformationszentrum Karlsruhe, Projektkennzeichen 0329840A-D, abrufbar bei www.bine.info, Stichwort: "Latentwärmespeicher"). Auf den Inhalt dieser Literaturstelle zum generellen Hintergrund von Latentwärmespeichermaterialien und deren Einsatzmöglichkeiten wird hiermit durch Bezugnahme verwiesen.

Ein Latentwärmespeicherelement gemäß der vorliegenden Erfindung ist ein Latentwärmespeichermaterial in einer geschlossenen, ggf. auch mit einem Druckausgleichsventil versehenen Umhüllung. Man spricht dabei auch von einem makroverkapselten PCM-Material. Die Umhüllung ist häufig aus Kunststoff. Man kennt die grundlegende Konstruktion beispielsweise von sog. Kühlakkus.

Derartige Latentwärmespeicherelemente können einzeln betrachtet werden oder auch als Mehrzahl von beispielsweise in einen entsprechenden Behälter eingebauten Latentwärmespeicherelementen.

Latentwärmespeicherelemente der in Rede stehenden Art gibt es mittlerweile für eine Fülle von Zieltemperaturen, insbesondere auch von der Anmelderin (Prospekt "va-Q-tec Packaging Portfolio, January 2011"). Dort findet man Latentwärmespeicherelemente für Zieltemperaturen von 37 °C, 22 °C, 4 °C, 0 °C, -19 °C, -21 °C und -32 °C. Andere Anbieter haben vergleichbare Latentwärmespeicherelemente im Vertriebsprogramm, teilweise auch für andere Zieltemperaturen.

Latentwärmespeicherelemente der in Rede stehenden Art werden in einem besonderen Anwendungsfeld in wärmegedämmten Behältern, insbesondere für Transportzwecke, eingesetzt. Beispielsweise gilt das für den Transport von temperatursensiblen Gütern wie Pharmazeutika, biotechnologische Produkte, Prüfapparate oder Proben für und aus klinischen Studien, Transplantationsgüter oder Blutkonserven. In diesem Anwendungsfeld beträgt die optimale, unbedingt einzuhaltende Transport- und Lagertemperatur beispielsweise 2 °C bis 8 °C. Häufig sind die Produkte Überhaupt nur in einem sehr engen Temperaturbereich stabil. Diese Produkte müssen daher zwingend in diesem Temperaturbereich transportiert und gelagert werden. Häufig dürfen solche für die Transporttemperatur sehr sensiblen Produkte zudem auf gar keinen Fall einfrieren. Temperaturen unter 0 °C müssen dann sicher vermieden werden. Es geht somit um eine sichere Erreichung und Einhaltung der Zieltemperatur mit einer vergleichsweise geringen Abweichung.

Als Zieltemperatur bezeichnen wir nachfolgend die Temperatur, die vom Latentwärmespeicherelement während des Phasenübergangs mit geringer Abweichung eingehalten wird und die sich aus dem verwendeten Latentwärmespeichermaterial des Latentwärmespeicherelementes ergibt.

Der Stand der Technik, von dem die vorliegende Erfindung ausgeht (WO 2004/104498 A2), betrifft einen wärmegedämmten Behälter, insbesondere für Transportzwecke, wobei der Behälter gegen Wärmeaustausch mit der Umgebungsatmosphäre vorzugsweise durch Vakuumisolationspaneele isoliert ist, und im Inneren mindestens ein Latentwärmespeicherelement der in Rede stehenden Art aufweist. Insoweit wird auf den Offenbarungsgehalt dieser vorveröffentlichten Druckschrift verwiesen, aus der sich viele Aspekte der Verwendung von Latentwärmespeicherelementen in Transportbehältern entnehmen lassen.

Die Technik von Vakuumisolationspaneelen ist im Grundsatz bereits seit längerer Zeit bekannt, wird aber laufend in herstellungstechnischer und werkstofftechnischer Hinsicht perfektioniert. Grundsätzlich darf für Vakuumisolationspaneele insoweit auf die DE 100 58 566 C2 verwiesen werden, die auf die Anmelderin der vorliegenden Anmeldung zurückgeht. Derartige Vakuumisolationspaneele sind derzeit die leistungsfähigsten Wärmeisolationselemente.

Im vorliegenden Fall geht es nun um ein Verfahren und eine Vorrichtung zur Vorkonditionierung von Latentwärmespeicherelementen.

Da die Innentemperaturen in thermischen Transportbehältern während des Transports in einem engen Temperaturbereich bleiben müssen, sollte sich die Temperatur des Latentwärmespeichermaterials in den Latentwärmespfeicherelementen von Beginn des Transportes an nahe am Schmelzpunkt befinden. Damit kann die latente Wärmekapazität der Latentwärmespeicherelemente weitgehend vollständig für den Transport nutzbar gemacht werden. So lassen sich lange Tramsportzeiten bei weitgehend konstanter Innentemperatur erzielen.

Durch eine besonders genaue Einstellung der Zieltemperatur (der Starttemperatur) der Latentwärmespeicherelemente kann man sogar bestimmen, ob die Temperatur im Inneren des Transportbehälters hauptsächlich gegen kalte Außentemperaturen, hauptsächlich gegen heiße Außentemperaturen oder gegen beide Einflüsse lange konstant gehalten werden soll.

Betrachten wir beispielsweise ein Latentwärmespeichermaterial, das zwischen 3 °C und 5 °C schmilzt. Soll mit diesem die Innentemperatur eines Transportbehälters bei heißen Sommertemperaturen möglichst lange unter 8 °C gehalten werden, dann sollte dieses Material vor Transportbeginn möglichst nahe an 3 °C vorgekühlt werden. Am besten erfolgt also (bei einer positiven Zieltemperatur) eine Vorkonditionierung auf die Untergrenze des Toleranzbereichs der Zieltemperatur, beispielsweise also hier auf etwa 3 °C, so dass während des Einsatzes im wärmeisolierten Transportbehälter noch eine möglichst große Wärmemenge aufgenommen werden kann. Das ist nämlich gleichbedeutend damit, dass über einen vergleichsweise langen Zeitraum die Zieltemperatur im Transportbehälter relativ genau eingehalten werden kann.

Dasselbe Latentwärmespeichermaterial kann aber auch dazu dienen, die Innentemperatur im Transportbehälter bei niedrigen Umgebungstemperaturen weit unter dem Gefrierpunkt (beispielsweise im nicht beheizten Frachtraum eines Flugzeugs auf einem Interkontinentalflug) dauernd sicher über dem Gefrierpunkt zu halten. Dann muss das zuvor beschriebene Latentwärmespeichermaterial eher wärmer vorkonditioniert werden, also eher am oberen Rand des Temperaturbereichs des Phasenübergangs.

Zur Vorkonditionierung von Latentwärmespeicherelementen benötigt man also eine möglichst genaue Vorkühltemperatur, die - wie erläutert - möglichst nahe am oder im Toleranzbereich der Zieltemperatur des eingesetzten Latentwärmespeichermaterials liegen sollte.

Zur Vorkonditionierung von derartigen Latentwärmespeicherelementen werden diese bislang in einen Kühlraum eingebracht. Ein Kühlraum hat normalerweise keine sonderlich genaue Temperatureinstellung. Beispielsweise liegt eine typische Gefrierraumtemperatur bei 5 °C mit einem Toleranzbereich von ± 2 °C, also irgendwo zwischen 3 °C und 7 °C. Das ist für Einsatzzwecke wie im Bereich der biotechnologischen Produkte etc., wie oben angegeben, nicht ausreichend. Will man die Anforderungen zum Transport oder zu sonstigen Handhabungen von temperaturempfindlichen Gütern erreichen, so muss man kompliziertere Verfahren zur Vorkonditionierung oder besonders präzise regelbare Kühleinrichtungen einsetzen. Derartige komplizierte Verfahren zur Vorkonditionierung sind fehleranfällig. Sie sind auch nicht in allen Ländern durchführbar, insbesondere nicht in Ländern mit einem niedrigeren Entwicklüngsstandard. Das Dokument US2011/067852A1 wird als der nächstliegende Stand der Technik angesehen und offenbart alle technischen Merkmale aus den Oberbegriffen der unabhängigen Ansprüche 1 und 9. Der Erfindung liegt daher das Problem zugrunde, ein Verfahren und eine Vorrichtung zur Vorkonditionierung von Latentwärmespeicherelementen anzugeben, das gewährleistet, dass die Latentwärmespeicherelemente bei ihrem Einsatz mit ihrer Zieltemperatur vorkonditioniert sind.
Das zuvor aufgezeigte Problem wird mit einem Verfahren mit den Merkmalen von Anspruch 1, sowie mit einer Vorrichtung zur Vorkonditionierung von einem oder mehreren Latentwärmespeicherelementen nach Anspruch 9 gelöst. Bevorzugte Ausgestaltung und Weiterbildungen sind Gegenstand der Ansprüche 2 bis 8, sowie der Ansprüche 10 bis 15. In den Ansprüchen wird der Plural für die Latentwärmespeicherelemente verwendet. Das dient ausschließlich der vereinfachten Erläuterung des Sachverhalts. Grundsätzlich sind Verfahren und Vorrichtung selbstverständlich auch dann benutzt, wenn in einem Fall nur ein einzelnes Latentwärmespeicherelement vorkonditioniert werden sollte.
Die hier beschriebene Erfindung löst das zuvor beschriebene Problem der Vorkonditionierung von einem oder mehreren Latentwärmespeicherelementen auf überzeugende Weise. Bei diesem Verfahren werden zu Beginn die Latentwärmespeicherelemente auf eine vorzugsweise deutlich unter der Zieltemperatur liegende Ausgangstemperatur abgekühlt. Das kann beispielsweise dadurch geschehen, dass die Latentwärmespeicherelemente in einen Kühlraum, ggf. auch in einen Gefrierraum eingebracht werden. Je nach Zieltemperatur kann man auch mit kälteren PCM-Materialien arbeiten, beispielsweise mit Wassereis oder Trockeneis. Wichtig ist, dass vor einer anschließenden weiteren Handhabung der Latentwärmespeicherelemente deren tatsächliche Temperatur einigermaßen genau bekannt ist, also diese Ausgangstemperatur jedenfalls in zeitlich brauchbarem Zusammenhang mit den folgenden Verfahrensschritten ermittelt wird.

Auf der Grundlage der Ausgangstemperatur, der Wärmekapazität der im vorliegenden Verfahren gehandhabten Latentwärmespeicherelemente und der Zieltemperatur dieser Latentwärmespeicherelemente wird dann errechnet, welche Wärmemenge den Latentwärmespeicherelementen zugeführt werden muss, um die Zieltemperatur der Latentwärmespeicherelemente zu erreichen. Das ist die gewünschte Soll-Wärmemenge.

Um kontrollierte Randbedingungen für die erfindungsgemäße Verfahrensweise zu haben, müssen die Latentwärmespeicherelemente nach dem Abkühlen auf die Ausgangstemperatur in einen wärmeisolierten, geschlossenen Behälter eingebracht werden. Dieser schafft die weitgehend konstanten Randbedingungen gegenüber der Umgebungsatmosphäre. Um die Soll-Wärmemenge dem Inneren des Behälters mit den darin befindlichen, noch die Ausgangstemperatur aufweisenden Latentwärmespeicherelementen zuzuführen, wird die Heizeinrichtung eingeschaltet. Sie wird dann mittels der Steuereinrichtung dauernd oder ggf. auch intervallmäßig so lange betrieben, bis die Soll-Wärmemenge in das Innere des Behälters eingebracht worden ist. Durch die Isolierung des Behälters verteilt sich die von der Heizeinrichtung in das Innere des Behälters eingebrachte Wärme gleichmäßig im Behälter und somit auch gleichmäßig auf die Latentwärmespeicherelemente. Eine evtl. schwankende Außentemperatur der Umgebungsatmosphäre hat auf das Innere des wärmeisolierten, geschlossenen Behälters praktisch keinen Einfluss.

Von entscheidender Bedeutung für die Lehre der Erfindung ist die Tatsache, dass die Latentwärmespeicherelemente dadurch vorkonditioniert werden, dass eine bestimmte, vorher berechnete Soll-Wärmemenge (also eine entsprechende Soll-Energiemenge) dem Inneren des geschlossenen Behälters zugeführt wird. Die Wärmemenge wird gemessen in der Einheit J (Joule) bzw, mit stärkerem Blick auf die Energiebetrachtung in kWh (Kilowattstunden). Wie sich die Temperatur im Inneren des Behälters während des Betriebs der Heizeinrichtung entwickelt, interessiert nicht.

Weil das erfindungsgemäße Verfahren die zuzuführende Soll-Wärmemenge errechnet und diese dann dem Inneren des Behälters zuführt, kann man die Vorkonditionierung der Latentwärmespeicherelemente ganz besonders genau durchführen. Man kann nämlich durch Bestimmung der Soll-Wärmemenge vorgeben, zu welchem Anteil die PCM-Materialien in den Latentwärmespeicherelementen schon flüssig und zu welchem Anteil noch fest sein sollen. Man kann also, bei im Wesentlichen konstanter Zieltemperatur, durch Anpassung der Soll-Wärmemenge an die Aufgabe der Latentwärmespeicherelemente diese so vorkonditionieren, dass sie noch fast vollständig fest oder schon fast vollständig flüssig sind. Damit kann man die Latentwärmespeicherelemente für den weiter oben erläuterten besonderen Einsatzzweck gezielt vorkonditionieren. Die Vorkonditionierung kann also berücksichtigen, ob die Latentwärmespeicherelemente später im Einsatz im geschlossenen Behälter eher bei sehr kalten oder eher bei sehr warmen Außentemperaturen ihre Funktion erfüllen müssen.

Hat man Transporte im Auge, bei denen das zu transportierende Gut sowohl gegen eine Erwärmung als auch gegen eine Abkühlung empfindlich ist, bei denen aber nicht verlässlich vorausgesagt werden kann, ob sich die Außentemperaturen während des Transports eher oberhalb oder eher unterhalb der Temperatur oder des Temperaturbereichs des Phasenübergangs der Latentwärmespeicherelemente befindet, so wird man die Zieltemperatur mit einer solchen Soll-Wärmemenge ansteuern, dass die Latentwärmespeicherelemente im Wesentlichen im Mittelbereich zwischen flüssig und fest liegen. Das erfindungsgemäße Verfahren zur Vorkonditionierung der Latentwärmespeicherelemente ist in besonderer Weise auf die Eigenschaft der Latentwärmespeicherelemente abgestellt, im Bereich des Phasenübergangs eine extrem hohe Energiedichte aufzuweisen.

Neben den im Anspruch 1 aufgeführten Eingangsgrößen für die Ermittlung der Soll-Wärmemenge kann es sich empfehlen, dass als weitere Eingangsgröße zur Berechnung der Soll-Wärmemenge die Ausgangstemperatur des Behälters vor dem Einbringen der ihre Ausgangstemperatur aufweisenden Latentwärmespeicherelemente gemessen und bei der Berechnung der Soll-Wärmemenge herangezogen wird.

Wie bereits oben erläutert worden ist, kann es sich ferner empfehlen, dass die Zieltemperatur der Latentwärmespeicherelemente in den unteren Teil oder an die untere Grenze des Temperaturbereichs des Phasenübergangs der Latentwärmespeicherelemente gelegt wird.

Für die Heizeinrichtung kann man zwei Möglichkeiten realisieren. Entweder ist die Heizeinrichtung selbst außerhalb des Behälters angeordnet und wird mit dem Inneren des Behälters wärmeübertragend verbunden. Hier könnte man sich beispielsweise ein Gebläse o. dgl. vorstellen. Allerdings wird in diesem Fall die komplette Wärmeisolation des Behälters an dieser Stelle unterbrochen. Demzufolge empfiehlt es sich eher, die Heizeinrichtung von vorneherein im Inneren des Behälters anzuordnen und von außerhalb des Behälters lediglich mittels der Steuereinrichtung anzusteuern, also in erster Linie ein- und auszuschalten.

Bei einer solchen Heizeinrichtung kann es sich beispielsweise um eine Elektroheizung handeln. Aber auch andere Wärmequellen allgemeiner Art, deren Wärmeleistung bekannt oder gut berechenbar ist, sind geeignet. Besonders bevorzugt ist der Einsatz in Verbindung mit einem Ventilator, also in Form beispielsweise eines Heizlüfters, da der Wärmeübertrag auf die Latentwärmespeicherelemente dadurch vergleichmäßigt wird. Die dafür einzusetzende Energiemenge muss natürlich bei der Gesamtberechnung Berücksichtigung finden.

Ist die Heizeinrichtung im Inneren des Behälters angeordnet worden, so empfiehlt es sich, dass diese Heizeinrichtung nach Erreichen der Soll-Wärmemenge aus dem Behälter entfernt wird. Zu diesem Zeitpunkt müssen die Latentwärmespeicherelemente ihre Zieltemperatur noch nicht erreicht haben. Regelmäßig wird die Heizeinrichtung bereits ausgeschaltet, wenn die Latentwärmespeicherelemente ihre Zieltemperatur noch nicht erreicht haben. Vielmehr entziehen die Latentwärmespeicherelemente nach dem Abschalten der Heizeinrichtung dem Inneren des geschlossenen Behälters weiter die darin noch befindliche überschüssige Wärmemenge und erreichen so nach dem Ausgleichsprozess die Zieltemperatur.

Die Steuerung der Heizeinrichtung erfolgt erfindungsgemäß bevorzugt mittels einer elektrischen bzw. elektronischen Steuereinrichtung. Damit soll vermieden werden, dass eine Bedienungsperson Bedienungsfehler macht. Die Soll-Wärmemenge kann in der Steuereinrichtung selbst errechnet werden. Dann hat die Steuereinrichtung eine entsprechende Eingabemöglichkeit oder ist mit entsprechenden Sensoren verbunden. Sie muss dann auch eine entsprechende Rechenkapazität zur Ausführung der entsprechenden Berechnungen aufweisen.

Man kann aber auch vorsehen, dass die Soll-Wärmemenge nicht in der Steuereinrichtung, sondern in einer von der Steuereinrichtung getrennten Computereinrichtung errechnet wird. Beispielsweise kann das mit einem auf einem normalem PC verwendeten Containerverwaltungsprogramms erfolgen. Dann wird nur noch das Ergebnis dieser Berechnung an die Steuereinrichtung übermittelt. Das kann automatisch oder durch eine Bedienungsperson erfolgen.

Grundsätzlich ist es auch möglich, die eigentliche Berechnung der Wärmemenge wiederum in einem separaten Gerät vorzunehmen, das weder Steuereinrichtung noch separate Computereinrichtung ist. Schließlich gilt, dass lauch manuelle Berechnungen im Grundsatz möglich sind. Sie sind aber mit größerer Fehlerquote verbunden.

Wichtig ist, dass die Steuereinrichtung die Heizeinrichtung über die Zeit so steuert, dass tatsächlich die Soll-Wärmemenge in das Innere des Behälters eingebracht wird. Dazu kann z. B. die Steuerungseinrichtung ständig die bereits eingebrachte Wärmemenge messen und dann die Heizeinrichtung ausschalten, wenn der kumulierte Wert der eingebrachten Wärme dem durch das Berechnungsprogramm vorgegebenen Sollwert entspricht.

Nach Ablauf des erfindungsgemäßen Verfahrens zur Vorkonditionierung von Latentwärmespeicherelementen befinden sich diese Latentwärmespeicherelemente auf ihrer Zieltemperatur. Sie sind optimal und fehlerfrei auf diese Zieltemperatur gebracht worden. Sie befinden sich im eingangs erläuterten Beispielfall im unteren Teil des Temperaturbereichs des Phasenübergangs, unterhalb von 4 °C, nahe bei 3 °C. Diese optimale Vorkonditionierung der Latentwärmespeicherelemente gelingt durch die "invertierte Vorkonditionierung" gemäß der Erfindung.

Besonders zweckmäßig lässt sich das erfindungsgemäße Verfahren durchführen, wenn als Behälter sogleich ein für den anschließenden Transport der temperaturempfindlichen Güter vorgesehener Transportbehälter verwendet wird. Ganz bevorzugt ist das ein mit Vakuumisolationspaneelen wärmeisolierter Behälter.

Vorzugsweise wird man in diesem Fall vor dem Transport der transportempfindlichen Güter die Heizeinrichtung aus dem Behälter entfernen.

Das erfindungsgemäße Verfahren funktioniert für beliebige Temperaturbereiche und beliebige Latentwärmespeicherelemente.

In vorrichtungsmäßiger Hinsicht wird das zuvor aufgezeigte Problem bei einer Vorrichtung gemäß Anspruch 9 gelöst. Bevorzugte Ausgestaltungen und Weiterbildungen sind Gegenstand der Ansprüche 10 bis 15.

Die Erläuterungen zur erfindungsgemäßen Vorrichtuhg entsprechen den Erläuterungen, die zuvor zum Verfahren gegeben worden sind,

Für die Ausgestaltung des wärmeisolierten, geschlossenen Behälters und dessen Isolierung darf auf den eingangs erläuterten Stand der Tiechnik verwiesen werden. Es geht um das Prinzip des wärmeisolierten Behälters, wobei die Ausführungen der konkreten Anforderung überlassen bleiben kann. Von besonderem Vorteil sind für die Wärmeisolierung des Behälters Vakuumisolationspaneele (siehe die eingangs genannten Zitatstellen). Aber auch eher klassischere Isolationen aus Polyurethan etc. können eingesetzt werden. Für die Ausgestaltung des Behälters, insbesondere dann, wenn er gleichzeitig und nachfolgend als Transportbehälter für die temperaturempfindlichen Güter dient, empfiehlt es sich, Einschübe zu verwenden, in denen die Latentwärmespeicherelemente in ihrer stabilen Umhüllung in definierter Position vorzugsweise an der Behälterwandung gehalten werden können.

Die vorliegende Erfindung hat den Vorteil, dass für die Vorkonditionierung der Latentwärmespeicherelemente auf herkömmliche Kühlräume oder Gefrierräume zurückgegriffen werden kann. Es kommt nicht darauf an, welche Temperatur sich in dem jeweiligen Vorbereitungsraum befindet. Wichtig ist nur, dass man die Ausgangstemperatur der Latentwärmespeicherelemente vor der Durchführung der Berechnung der Soll-Wärmemenge einigermaßen genau feststellt. Das lässt sich auf einfache Weise machen. Dabei ist selbst eine gewisse Bandbreite bei der Ausgangstemperatur hinnehmbar, weil sich die Latentwärmespeicherelemente hier im Bereich der sensiblen Wärmespeicherung befinden.

Von besonderer Bedeutung ist, dass Bedienungspersonen in das Verfahren kaum eingebunden werden müssen, weil nur die wesentlichen Ausgangsdaten einzugeben sind. Den Rest erledigt die Steuereinrichtung bzw. die Berechnungs-Software.

Die Vorrichtung kann mit entsprechenden Anzeigeeinrichtungen zur Anzeige der gewünschten Werte versehen werden, so dass jederzeit eine einfache Überprüfung möglich ist.

Im Folgenden wird die Erfindung nun anhand einer lediglich ein bevorzugtes Ausführungsbeispiel darstellenden Zeichnung näher erläutert. In der Zeichnung zeigt
- Fig. 1: anhand eines Blockschaltbildes einen bevorzugten Verfahrensablauf,
- Fig. 2: einen bevorzugten, sogleich als Transportbehälter geeigneten Behälter zur Verwendung in dem erfindungsgemäßen Verfahren bzw. innerhalb einer erfindungsgemäßen Vorrichtung.

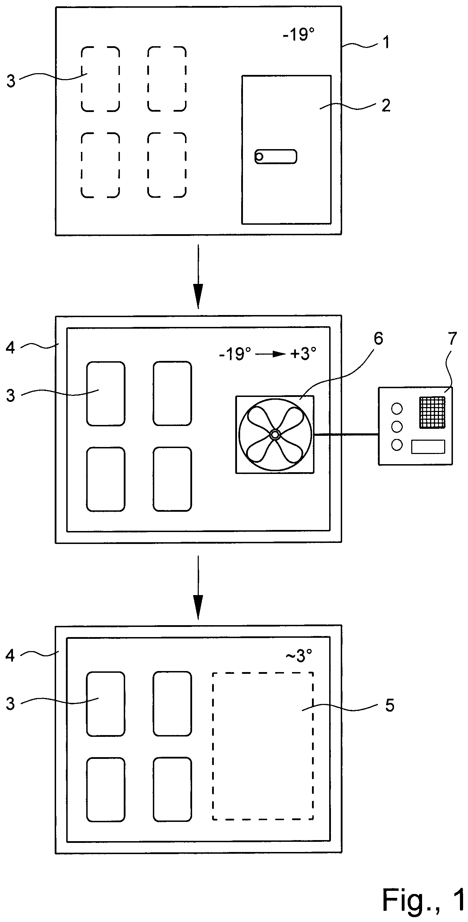

Fig. 1 zeigt oben zunächst einen Kühlraum 1 mit einer Verschlusstür 2 als Beispiel dafür, wie man Latentwärmespeicherelemente 3, die in Fig. 1 oben ebenfalls angedeutet sind, auf eine unter der Zieltemperatur liegende Ausgangstemperatur abkühlen kann. Dargestellt ist ein Kühlraum 1 (Gefrierraum) mit einer typischen Temperatur von -19 °C. Auf die genaue Temperatur kommt es nicht an. Wesentlich ist lediglich, dass die Latentwärmespeicherelemente 3 im Kühlraum 1 eine bestimmbare, also genau ermittelbare Ausgangstemperatur haben.

In der zweiten Darstellung in Fig. 1 sind die vier Latentwärmespeicherelemente 3 aus dem Kühlraum 1 entfernt und in einen wärmeisolierenden, geschlossenen Behälter 4 eingebracht worden. Entsprechend einem bevorzugten Ausführungsbeispiel der Erfindung handelt es sich bei diesem wärmeisolierten, geschlossenen Behälter 4 um einen Behälter, der später dazu dient, temperaturempfindliche Güter 5, gestrichelt dargestellt in der dritten Darstellung, zu transportieren.

Bei solchen temperaturempfindlichen Gütern 5 handelt es sich, wie eingangs der Beschreibung erläutert worden ist, beispielsweise um Pharmazeutika, biotechnologische Produkte, Transplantationsgüter, Blut, temperatursensible Lebensmittel etc.

In der zweiten Darstellung in Fig. 1 erkennt man im Inneren des Behälters 4 eine Heizeinrichtung 6. Diese ist hier als Heizlüfter angedeutet. Tatsächlich kann man im einfachsten Fall in einen solchen Behälter 4 einen normalen Haushalts-Heizlüfter als Heizeinrichtung 6 einsetzen. Die Heizeinrichtung 6 dient zum Beheizen des Inneren des dann geschlossenen Behälters 4. Der geschlossene Behälter 4 befindet sich wegen seiner Isolierung im Inneren nach Einbringen der Latentwärmespeicherelemente 3 zunächst auf deren Ausgangstemperatur oder nahe daran.

Ausgehend von der niedrigen Ausgangstemperatur der Latentwärmespeicherelemente 3, der Wärmekapazität der im Behälter 4 befindlichen Latentwärmespeicherelemente 3 und der Zieltemperatur für diese Latentwärmespeicherelemente 3 wird, hier mittels einer außerhalb des Behälters 4 befindlichen Steuereinrichtung 7, errechnet, welche Wärmemenge dem Inneren des Behälters 4 zugeführt werden muss, damit die Latentwärmespeicherelemente 3 so genau wie möglich ihre Zieltemperatur erreichen. Es wird also ermittelt, welche Soll-Wärmemenge eingebracht werden muss.

Eine noch genauere Berechnung der Soll-Wärmemenge ist dann möglich, wenn man auch die Ausgangstemperatur des Behälters 4 vor dem Einbringen der ihre Ausgangstemperatur aufweisenden Latentwärmespeicherelemente 3 bei der Berechnung der Soll-Wärmemenge als Eingangsgröße erfasst.

Die Ermittlung der Ausgangstemperatur der Latentwärmespeicherelemente 3 ist bei dem erfindungsgemäßen Verfahren nicht sonderlich kritisch. Das liegt daran, dass, wie eingangs erläutert, die einzubringende Wärmemenge bei sensibler Wärmespeicherung für eine bestimmte Temperaturdifferenz nicht besonders groß ist. Man kann das am Beispiel von Wasser erläutern. Um Wasser von der festen Phase mit 0 °C in die flüssige Phase mit 0 °C zu überführen, also zu schmelzen, benötigt man eine ebenso große Wärmemenge wie anschließend für die Erwärmung des Wasser von 0 °C auf 80 °C erforderlich ist. Man hat also bei der Ausgangstemperatur der Latentwärmespeicherelemente 3, die sich im Bereich der sensiblen Wärme befindet, einen erheblichen Toleranzbereich.

Mittels der Steuereinrichtung 7 wird im in Fig. 1 dargestellten Ausführungsbeispiel die Heizeinrichtung 6 eingeschaltet und dauernd oder intervallmäßig so lange betrieben, bis die Soll-Wärmemenge in das Innere des Behälters 4 eingebracht worden ist. Dann wird die Heizeinrichtung 6 abgeschaltet. In der mittleren Darstellung in Fig. 1 ist das durch den Temperaturanstieg von -19 °C auf +3 °C schematisch dargestellt. In der Praxis wird es regelmäßig so sein, dass die Heizeinrichtung 6 die Temperatur im Inneren des geschlossenen Behälters 4 auf einen deutlich höheren Wert als die Zieltemperatur der Latentwärmespeicherelemente 3 aufheizt und dann, wenn nämlich die Soll-Wärmemenge zugeführt worden ist, abgeschaltet wird. Im Anschluss daran erfolgt in dem weiterhin geschlossenen Behälter 4 der weiter oben bereits beschriebene Temperaturausgleich durch Wärmeübergang aus dem Inneren des Behälters 4 in die Latentwärmespeicherelemente 3. Die hier angegebene Temperatur von +3 °C für die mittlere Darstellung in Fig. 1 der Zeichnung steht für den Endzustand, in dem die Latentwärmespeicherelemente 3 auf die Zieltemperatur von + 3 °C aufgewärmt worden sind.

Aufgrund der Vorgabe der Soll-Wärmemenge ist es, wie weiter oben erläutert worden ist, auch bei einem sehr schmalen Temperaturbereich des Phasenübergangs der Latentwärmespeicherelemente 3 möglich, die Latentwärmespeicherelemente 3 so vorkonditionieren, dass sie in gewünschten, vorgegebenen Anteilen flüssig und fest vorliegen.

In der untersten Darstellung in Fig. 1 sieht man, dass der Behälter 4 hier gleichzeitig als Transportbehälter für die temperaturempfindlichen Güter 5 dient. Die Heizeinrichtung 6 ist in diesem Ausführungsbeispiel zum Transport der Güter 5 aus dem Behälter 4 entfernt worden. Auch die Steuereinrichtung 7 ist abgekoppelt. Durch die Latentwärmespeicherelemente 3 wird die Temperatur im Inneren des Behälters 4 über eine lange Zeit, beispielsweise 48 Stunden, auf etwa 3 °C, maximal langsam ansteigend bis 5 °C, gehalten. Für den Transport kann noch ein Temperatursensor für die Temperatur im Inneren des Behälters 4 vorhanden sein und eine Temperaturanzeige auf der Außenseite des Behälters 4. Das erlaubt während des Transports eine Kontrolle der Temperatur im Inneren des Behälters 4.

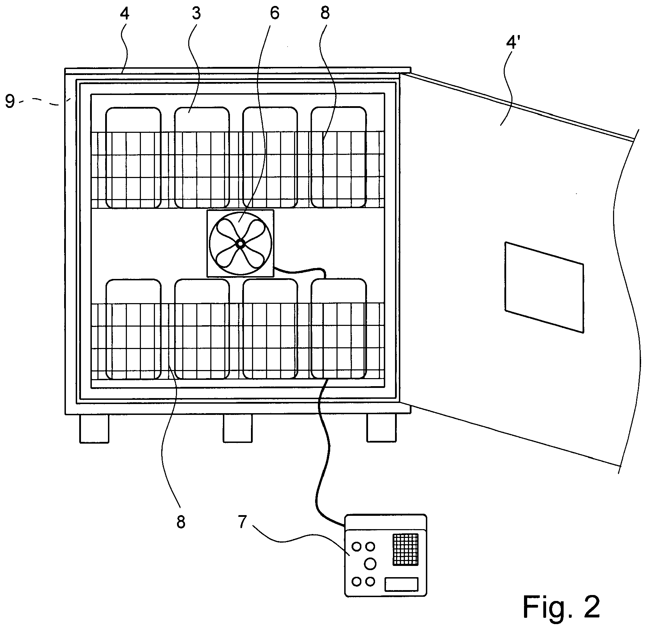

Fig. 2 zeigt, stark schematisiert, einen typischen Transportbehälter 4 für temperaturempfindliche Güter 5. Diese sind im Transportbehälter 4 hier nicht dargestellt. Der Transportbehälter 4 wird durch eine rechts angeschlagene Verschlusstür 4' geschlossen. Derzeit ist die Verschlusstür 4' geöffnet, um in das Innere des Behälters 4 hineinsehen zu können. Im Inneren des Behälters 4 sieht man eine Vielzahl von Latentwärmespeicherelementen 3, die im dargestellten und bevorzugten Ausführungsbeispiel an den Wänden im Inneren des Behälters 4 in Einschubführungen 8 angeordnet sind. Der Transportbehälter 4 ist nach außen hin durch in seinen Wänden angeordnete Vakuumisolationspaneele 9 (in den Wänden verdeckt, daher Bezugslinie gestrichelt) höchst wirksam isoliert. Im Einzelnen darf auf die in der Beschreibungseinleitung dazu gemachten Anmerkungen sowie den dort genannten Stand der Technik verwiesen werden.

Im Inneren des Transportbehälters 4 in Fig. 2 sieht man die dort angeordnete Heizeinrichtung 6 in Form eines Heizlüfters. Ein Steuerkabel führt von der Heizeinrichtung 6 aus dem Transportbehälter 4 heraus zu einer elektronisdhen Steuereinrichtung 7. Wird, von der Darstellung in Fig. 2 ausgehend, die Verschlusstür 4' geschlossen, so kann das Vorkonditionieren der Latentwärmespeicherelemente im Inneren des Transportbehälters 4 beginnen.

Die erfindungsgemäße Vorkonditionierung von Latentwärmespeicherelementen kann man überall auf der Welt verlässlich durchführen, weil es überall auf der Welt Kühlräume gibt, in denen die Latentwärmespeicherelemente 3 auf passende Ausgangstemperatur vorkonditioniert werden können. Von dort ausgehend bietet das erfindungsgemäße Verfahren und die erfindungsgemäße Vorrichtung selbst den Weg, um durch Aufheizen genau auf die Zieltemperatur zu kommen. Das wird möglich, weil die zuzuführende Soll-Wärmemenge berechnet und für die Steuerung des Verfahrens genutzt wird.

Die Tatsache, dass die Heizeinrichtung 6 bei der bevorzugten Ausgestaltung des erfindungsgemäßen Verfahrens und der erfindungsgemäßen Vorrichtung nach dem Vorkonditionieren der Latentwärmespeicherelemente 3 im Inneren des Behälters 4 entfernt wird hat zur Folge, dass der dann zum Transport der temperaturempfindlichen Güter dienende Behälter 4 rein passiv arbeitet. Er ist somit ohne Einschränkungen für Luftfracht tauglich.

## Patentansprüche

1. Verfahren zur Vorkonditionierung von einem oder mehreren Latentwärmespeicherelementen (3), bei denen die Temperatur oder der schmale Temperaturbereich des Phasenübergangs eine Zieltemperatur definiert,
bei dem zunächst die Latentwärmespeicherelemente (3) auf eine unter der Zieltemperatur liegende Ausgangstemperatur abgekühlt werden und diese Ausgangstemperatur ermittelt wird,
bei dem dann die die Ausgangstemperatur aufweisenden Latentwärmespeicherelemente (3) in einen wärmeisolierten Behälter (4) eingebracht werden und der Behälter (4) dann geschlossen wird,
wobei das Innere des geschlossenen Behälters (4) mit einer Heizeinrichtung (6) verbunden wird oder ist, deren im Inneren des geschlossenen Behälters (4) wirksam werdende Wärmeleistung bekannt ist,
**dadurch gekennzeichnet,**
**dass** aus der Ausgangstemperatur der Latentwärmespeicherelemente (3), der Wärmekapazität der im Behälter (4) befindlichen Latentwärmespeicherelemente (3) und der Zieltemperatur der Latentwärmespeicherelemente (3) errechnet wird, welche Wärmemenge dem Inneren des Behälters (4) zugeführt werden muss, damit die Latentwärmespeicherelemente (3) die Zieltemperatur erreichen und dass die Heizeinrichtung (6) eingeschaltet und dauernd oder intervallmäßig so lange betrieben wird, bis dem Inneren des geschlossenen Behälters (4) eine Soll-Wärmemenge zugeführt worden ist.

2. Verfahren nach Anspruch 1, **dadurch gekennzeichnet,**
**dass** als weitere Eingangsgröße zur Berechnung der Soll-Wärmemenge die Ausgangstemperatur des Behälters (4) vor dem Einbringen der ihre Ausgangstemperatur aufweisenden Latentwärmespeicherelemente (3) gemessen und bei der Berechnung der Soll-Wärmemenge herangezogen wird.

3. Verfahren nach einem der vorhergehenden Ansprüche, **dadurch gekennzeichnet, dass** die Zieltemperatur der Latentwärmespeicherelemente (3) in den unteren Teil oder an die untere Grenze des Temperaturbereichs des Phasenübergangs der Latentwärmespeicherelemente (3) gelegt wird.

4. Verfahren nach einem der vorhergehenden Ansprüche, **dadurch gekennzeichnet, dass** die Heizeinrichtung (6) außerhalb des Behälters (4) angeordnet ist und mit dem Inneren des Behälters (4) wärmeübertragend verbunden wird oder dass die Heizeinrichtung (6) von vorneherein im Inneren des Behälters (4) angeordnet wird und von außerhalb des Behälters (4) lediglich ein- und ausgeschaltet oder anderweit gesteuert wird.

5. Verfahren nach einem der vorhergehenden Ansprüche, **dadurch gekennzeichnet, dass** eine im Behälter (4) befindliche Heizeinrichtung (6) nach Erreichen der Soll-Wärmemenge aus dem Behälter (4) entfernt wird.

6. Verfahren nach einem der vorhergehenden Ansprüche, **dadurch gekennzeichnet, dass** die Heizeinrichtung (6) mittels einer elektrischen/elektronischen Steuereinrichtung (7) gesteuert wird,
wobei, vorzugsweise, die Soll-Wärmemenge in der Steuereinrichtung (7) oder in einer von der Steuereinrichtung (7) getrennten Computereinrichtung errechnet wird.

7. Verfahren nach einem der vorhergehenden Ansprüche, **dadurch gekennzeichnet, dass** als Behälter (4) ein für einen anschließenden Transport temperaturempfindlicher Güter vorgesehener Transportbehälter verwendet wird, wobei, vorzugsweise, vor dem Transport der temperatur empfindlichen Güter die Heizeinrichtung (6) aus dem Behälter (4) entfernt wird.

8. Verfahren nach einem der vorhergehenden Ansprüche, **dadurch gekennzeichnet, dass** ein mit Vakuumisolationspaneelen wärmeisolierter Behälter (4) verwendet wird.

9. Vorrichtung zur Vorkonditionierung von einem oder mehreren Latentwärmespeicherelementen,
mit einem wärmeisolierten, geschlossenen Behälter (4), einer Heizeinrichtung (6) zum Beheizen des Inneren des geschlossenen Behälters (4) und einer elektrischen/elektronischen Steuereinrichtung (7) zum Ein- und Ausschalten oder anderweitigen Steuern der Heizeinrichtung (6),
wobei die eine bestimmte, bekannte Ausgangstemperatur aufweisenden Latentwärmespeicherelemente (3) im geschlossenen Behälter (4) anordenbar sind,
wobei die im geschlossenen Behälter (4) angeordneten Latentwärmespeicherelemente (3) mittels der Heizeinrichtung (6) auf eine bestimmte, gegenüber der Ausgangstemperatur höhere Zieltemperatur bringbar sind, **dadurch gekennzeichnet, dass** mittels der Steuereinrichtung (7) oder mittels einer von der Steuereinrichtung (7) getrennten Computereinrichtung auf Basis der Ausgangstemperatur der Latentwärmespeicherelemente (3), der Wärmekapazität der im Behälter (4) befindlichen Latentwärmespeicherelemente (3) und der Zieltemperatur der Latentwärmespeicherelemente (3) errechenbar ist, welche Wärmemenge dem Inneren des Behälters (4) zugeführt werden muss, damit die Latentwärmespeicherelemente (3) die Zieltemperatur erreichen, und dass die Heizeinrichtung (6) einschaltbar ist und nach Einbringen einer Soll-Wärmemenge in das Innere des geschlossenen Behälters (4) die Heizeinrichtung (6) mittels der Steuereinrichtung (7) abschaltbar ist.

10. Vorrichtung nach Anspruch 9, **dadurch gekennzeichnet,**
**dass** als weitere Eingangsgröße zur Berechnung der Soll-Wärmemenge die Ausgangstemperatur des Behälters (4) vor dem Einbringen der ihre Ausgangstemperatur aufweisenden Latentwärmespeicherelemente (3) messbar ist.
und **dass** die gemessene Ausgangstemperatur des Behälters (4) bei der Errechnung der Soll-Wärmemenge heranziehbar ist.

11. Vorrichtung nach Anspruch 9 oder 10, **dadurch gekennzeichnet,**
**dass** die Heizeinrichtung (6) außerhalb des Behälters (4) angeordnet und mit dem Inneren des Behälters (4) wärmeübertragend verbunden ist oder
**dass** die Heizeinrichtung (6) von vorneherein im Inneren des Behälters (4) angeordnet ist und von außerhalb des Behälters (4) lediglich ein- und ausschaltbar oder anderweit steuerbar ist.

12. Vorrichtung nach einem der Ansprüche 9 bis 11, **dadurch gekennzeichnet,**
**dass** der Behälter (4) ein für den Transport temperaturempfindlicher Güter bestimmter und geeigneter Transportbehälter ist.

13. Vorrichtung nach einem der Ansprüche 9 bis 12, **dadurch gekennzeichnet,**
**dass** der Behälter (4) mit Vakuumisolationspaneelen als Wärmeisolation ausgestattet ist.

14. Vorrichtung nach einem der Ansprüche 9 bis 13, **dadurch gekennzeichnet,**
**dass** der Behälter (4), die Heizeinrichtung (6), die Steuereinrichtung (7) und ein ggf. vorhandenes weiteres Gerät zur Berechnung der Wärmemenge jeweils separate Komponenten sind,
wobei, vorzugsweise, einige der genannten Komponenten ein zusammenhängendes Gerät bilden und mindestens eine weitere Komponente separat von diesem Gerät ausgeführt ist.

15. Vorrichtung nach einem der Ansprüche 9 bis 14, **dadurch gekennzeichnet,**
**dass** der Behälter (4), die Heinzeinrichtung (6), die Steuereinrichtung (7) und ein ggf. vorhandenes weiteres Gerät zur Berechnung der Wärmemenge als ein einziges, komplettes Gerät ausgeführt sind.

## Claims

1. Method for the pre-conditioning of one or more latent heat storage elements (3) in which the temperature or the narrow temperature range of the phase transition defines a target temperature,
in which first of all the latent heat storage elements (3) are cooled to an initial temperature lying below the target temperature and said initial temperature is determined,
in which the latent heat storage elements (3) which are at the initial temperature are then introduced into a thermally insulated container (4) and the container (4) is then closed,
wherein the interior of the closed container (4) is or has been connected to a heating device (6), the thermal output of which, which becomes effective in the interior of the closed container (4), is known,
**characterized in that**
the initial temperature of the latent heat storage elements (3), the thermal capacity of the latent heat storage elements (3) located in the container (4), and the target temperature of the latent heat storage elements (3) are used to calculate the quantity of heat which has to be supplied to the interior of the container (4) so that the latent heat storage elements (3) reach the target temperature, and
**in that** the heating device (6) is switched on and is operated continuously or at intervals until a desired quantity of heat has been supplied to the interior of the closed container (4).

2. Method according to Claim 1, **characterized in that**, as a further input variable for calculating the desired quantity of heat, the initial temperature of the container (4) before the introduction of the latent heat storage elements (3), which are at the initial temperature thereof, is measured and is used in the calculation of the desired quantity of heat.

3. Method according to either of the preceding claims, **characterized in that** the target temperature of the latent heat storage elements (3) is placed into the lower part or onto the lower limit of the temperature range of the phase transition of the latent heat storage elements (3).

4. Method according to any of the preceding claims, **characterized in that** the heating device (6) is arranged outside the container (4) and is connected to the interior of the container (4) in a heat-transmitting manner, or
**in that** the heating device (6) is positioned in the interior of the container (4) right away and is merely switched on and off or controlled in some other manner from outside the container (4).

5. Method according to any of the preceding claims, **characterized in that** a heating device (6) which is located in the container (4) is removed from the container (4) after the desired quantity of heat is reached.

6. Method according to any of the preceding claims, **characterized in that** the heating device (6) is controlled by means of an electric/electronic control device (7), wherein, preferably, the desired quantity of heat is calculated in the control device (7) or in a computer device separate from the control device (7).

7. Method according to any of the preceding claims, **characterized in that** the container (4) used is a transport container which is provided for subsequent transport of temperature-sensitive items,
wherein, preferably, the heating device (6) is removed from the container (4) before the transport of the temperature-sensitive items.

8. Method according to any of the preceding claims, **characterized in that** a container (4) which is thermally insulated with vacuum insulation panels is used.

9. Apparatus for the pre-conditioning of one or more latent heat storage elements,
comprising a thermally insulated, closed container (4), a heating device (6) for heating the interior of the closed container (4) and an electric/electronic control device (7) for switching the heating device (6) on and off or controlling same in some other manner,
wherein the latent heat storage elements (3) which are at a certain known initial temperature are arrangeable in the closed container (4),
wherein the latent heat storage elements (3) arranged in the closed container (4) are bringable to a certain target temperature which is higher than the initial temperature by means of the heating device (6), **characterized in that** the control device (7) or a computer device separate from the control device (7) is used to calculate, on the basis of the initial temperature of the latent heat storage elements (3), the thermal capacity of the latent heat storage elements (3) located in the container (4), and the target temperature of the latent heat storage elements (3), the quantity of heat which has to be supplied to the interior of the container (4) so that the latent heat storage elements (3) will reach the target temperature, and
**in that** the heating device (6) can be switched on and, after a desired quantity of heat is introduced into the interior of the closed container (4), the heating device (6) can be switched off by means of the control device (7) .

10. Apparatus according to Claim 9, **characterized in that**, as a further input variable for calculating the desired quantity of heat, the initial temperature of the container (4) before the introduction of the latent heat storage elements (3), which are at the initial temperature thereof, is measureable,
and **in that** the measured initial temperature of the container (4) is usable in the calculation of the desired quantity of heat.

11. Apparatus according to Claim 9 or 10, **characterized in that** the heating device (6) is arranged outside the container (4) and is connected to the interior of the container (4) in a heat-transmitting manner, or
**in that** the heating device (6) is arranged from the outset in the interior of the container (4) and can merely be switched on and off or can be controlled in some other manner from outside the container (4).

12. Apparatus according to any of the Claims 9 to 11, **characterized in that** the container (4) is a transport container which is defined and suitable for the transport of temperature-sensitive items.

13. Apparatus according to any of the Claims 11 to 12, **characterized in that** the container (4) is equipped with vacuum insulation panels as thermal insulation.

14. Apparatus according to any of the Claims 9 to 13, **characterized in that** the container (4), the heating device (6), the control device (7) and an optionally present further unit for calculating the quantity of heat are in each case separate components,
wherein, preferably, some of the components mentioned form a cohesive unit and at least one further component is realized separately from said unit.

15. Apparatus according to any of the Claims 9 to 14, **characterized in that** the container (4), the heating device (6), the control device (7) and an optionally present further unit for calculating the quantity of heat are realized as a single complete unit.

## Revendications

1. Procédé de préconditionnement d'un ou plusieurs éléments d'accumulateur de chaleur latente (3), dans lesquels la température ou la plage étroite de températures de la transition de phase définit une température cible, dans lequel
tout d'abord les éléments d'accumulateur de chaleur latente (3) sont refroidis à une température initiale située en dessous de la température cible et cette température initiale est déterminée,
les éléments d'accumulateur de chaleur latente (3) à la température initiale étant ensuite introduits dans un récipient isolé thermiquement (4) et le récipient (4) étant ensuite fermé,
l'intérieur du récipient fermé (4) étant connecté à un dispositif de chauffage (6) dont la puissance thermique active à l'intérieur du récipient fermé (4) est connue,
**caractérisé**
**en ce qu'**à partir de la température initiale des éléments d'accumulateur de chaleur latente (3), de la capacité thermique des éléments d'accumulateur de chaleur latente (3) se trouvant dans le récipient (4) et de la température cible des éléments d'accumulateur de chaleur latente (3), on calcule quelle quantité de chaleur doit être acheminée à l'intérieur du récipient (4) afin que les éléments d'accumulateur de chaleur latente (3) atteignent la température cible et
**en ce que** le dispositif de chauffage (6) est enclenché et fonctionne de manière durable ou à intervalles jusqu'à ce qu'une quantité de chaleur de consigne ait été acheminée à l'intérieur du récipient fermé (4).

2. Procédé selon la revendication 1, **caractérisé en ce que** l'on mesure, en tant que grandeur d'entrée supplémentaire pour le calcul de la quantité de chaleur de consigne, la température initiale du récipient (4) avant l'introduction des éléments d'accumulateur de chaleur latente (3) présentant leur température initiale, et on l'utilise pour le calcul de la quantité de chaleur de consigne.

3. Procédé selon l'une quelconque des revendications précédentes, **caractérisé en ce que** la température cible des éléments d'accumulateur de chaleur latente (3) est déterminée dans la partie inférieure ou à la limite inférieure de la plage de température de la transition de phase des éléments accumulateurs de chaleur latente (3).

4. Procédé selon l'une quelconque des revendications précédentes, **caractérisé en ce que** le dispositif de chauffage (6) est disposé à l'extérieur du récipient (4) et est connecté par transfert thermique à l'intérieur du récipient (4) ou **en ce que** le dispositif de chauffage (6) est disposé dès l'abord à l'intérieur du récipient (4) et est seulement allumé et éteint ou commandé d'une autre manière depuis l'extérieur du récipient (4).

5. Procédé selon l'une quelconque des revendications précédentes, **caractérisé en ce qu'**un dispositif de chauffage (6) se trouvant dans le récipient (4) est enlevé du récipient (4) une fois la quantité de chaleur de consigne atteinte.

6. Procédé selon l'une quelconque des revendications précédentes, **caractérisé en ce que** le dispositif de chauffage (6) est commandé au moyen d'un dispositif de commande électrique/électronique (7), la quantité de chaleur de consigne étant de préférence calculée dans le dispositif de commande (7) ou dans un dispositif informatique séparé du dispositif de commande (7).

7. Procédé selon l'une quelconque des revendications précédentes, **caractérisé en ce que** l'on utilise en tant que récipient (4) un récipient de transport prévu pour un transport subséquent de matières sensibles à la température, de préférence, le dispositif de chauffage (6) étant enlevé du récipient (4) avant le transport des matières sensibles à la température.

8. Procédé selon l'une quelconque des revendications précédentes, **caractérisé en ce que** l'on utilise un récipient (4) isolé thermiquement avec des panneaux d'isolation sous vide.

9. Dispositif de préconditionnement d'un ou plusieurs éléments d'accumulateur de chaleur latente, comprenant un récipient fermé (4), isolé thermiquement, un dispositif de chauffage (6) pour chauffer l'intérieur du récipient fermé (4) et un dispositif de commande électrique/électronique (7) pour allumer et éteindre ou commander d'une autre manière le dispositif de chauffage (6), les éléments d'accumulateur de chaleur latente (3), présentant une température initiale déterminée connue, pouvant être disposés dans le récipient fermé (4),
les éléments d'accumulateur de chaleur latente (3) disposés dans le récipient fermé (4) pouvant être amenés à une température cible déterminée, plus élevée que la température initiale, au moyen du dispositif de chauffage (6)
**caractérisé en ce qu'**au moyen du dispositif de commande (7) ou au moyen d'un dispositif informatique séparé du dispositif de commande (7), sur la base de la température initiale des éléments d'accumulateur de chaleur latente (3), de la capacité thermique des éléments d'accumulateur de chaleur latente (3) se trouvant dans le récipient (4) et de la température cible des éléments d'accumulateur de chaleur latente (3), on peut calculer quelle quantité de chaleur doit être acheminée à l'intérieur du récipient (4) afin que les éléments d'accumulateur de chaleur latente (3) atteignent la température cible, et **en ce que** le dispositif de chauffage (6) peut être allumé, et après l'introduction d'une quantité de chaleur de consigne à l'intérieur du récipient fermé (4), le dispositif de chauffage (6) peut être éteint au moyen du dispositif de commande (7).

10. Dispositif selon la revendication 9, **caractérisé en ce que** l'on peut mesurer, en tant que grandeur de départ supplémentaire pour le calcul de la quantité de chaleur de consigne, la température initiale du récipient (4) avant l'introduction des éléments d'accumulateur de chaleur latente (3) présentant leur température initiale, et **en ce que** la température initiale du récipient (4) mesurée peut être utilisée lors du calcul de la quantité de chaleur de consigne.

11. Dispositif selon la revendication 9 ou 10, **caractérisé en ce que** le dispositif de chauffage (6) est disposé à l'extérieur du récipient (4) et est connecté à l'intérieur du récipient (4) par transfert thermique ou **en ce que** le dispositif de chauffage (6) est disposé dès l'abord à l'intérieur du récipient (4) et peut être seulement allumé et éteint ou commandé d'une autre manière depuis l'extérieur du récipient (4).

12. Dispositif selon l'une quelconque des revendications 9 à 11, **caractérisé en ce que** le récipient (4) est un récipient de transport prévu et adapté pour le transport de matières sensibles à la température.

13. Dispositif selon l'une quelconque des revendications 9 à 12, **caractérisé en ce que** le récipient (4) est muni de panneaux d'isolation sous vide en tant qu'isolation thermique.

14. Dispositif selon l'une quelconque des revendications 9 à 13, **caractérisé en ce que** le récipient (4), le dispositif de chauffage (6), le dispositif de commande (7) et un appareil supplémentaire éventuellement prévu pour calculer la quantité de chaleur sont à chaque fois des composants séparés, de préférence certains desdits composants formant un appareil cohésif et au moins un composant supplémentaire étant réalisé séparément de cet appareil.

15. Dispositif selon l'une quelconque des revendications 9 à 14, **caractérisé en ce que** le récipient (4), le dispositif de chauffage (6), le dispositif de commande (7) et un appareil supplémentaire éventuellement prévu sont réalisés pour calculer la quantité de chaleur, sous la forme d'un appareil unique, complet.
